# EUROPÄISCHE PATENTSCHRIFT

(11) **EP 2 675 673 B1**
(45) Veröffentlichungstag und Bekanntmachung des Hinweises auf die Patenterteilung: **10.06.2015**
(21) Anmeldenummer: 12703819.8
(22) Anmeldetag: 15.02.2012
(51) Int. Cl.: B60T 13/66, B60T 13/68, B60T 17/02, B60T 17/18, B60T 17/22

(54) **DRUCKLUFTVERSORGUNGSEINRICHTUNG FÜR NUTZFAHRZEUGE**
COMPRESSED AIR SUPPLY FOR COMMERCIUAL VEHICLE
DISPOSITIF D'ALIMENTATION EN AIR COMPRIMÉ POUR VÉHICULES UTILITAIRES

(30) Priorität: 17.02.2011 DE 102011011634
(43) Veröffentlichungstag der Anmeldung: 25.12.2013
(73) Patentinhaber: KNORR-BREMSE Systeme für Nutzfahrzeuge GmbH, 80809 München (DE)
(72) Erfinder: SCHNITTGER, Karsten, 80935 München (DE); BALOGH, Levente, H-2310 Szigetszentmiklos (HU); KRABOT, Matyas, H-2310 Szigetszentmiklós (HU)
(86) Internationale Anmeldenummer: PCT/EP2012/052575
(87) Internationale Veröffentlichungsnummer: WO 2012/110550

(56) Entgegenhaltungen:
- GB-A- 2 284 458
- US-A1- 2009 195 058

## Beschreibung

Die vorliegende Erfindung betrifft eine Druckluftversorgungseinrichtung für Nutzfahrzeuge.

Bei modernen Nutzfahrzeugen werden häufig pneumatische Systeme wie Druckluftbremsen eingesetzt. Zur Versorgung derartiger pneumatischer Systeme mit Druckluft dienen Druckluftversorgungseinrichtungen, die in der Regel eine elektronische Steuereinrichtung aufweisen. Um über die elektronische Steuereinrichtung Ventile der Druckluftversorgungseinrichtung gezielt ansteuern zu können, sind die Ventile häufig als Magnetventile ausgebildet. Somit lässt sich eine präzise Steuerung von über einen Kompressor bereitgestellter Druckluft und einer Regenerierung des Luftfilters erreichen. Um bei Ausfall der elektronischen Steuereinrichtung, beispielsweise durch eine fehlerhafte Stromversorgung oder wegen eines Sensorversagens, die Druckluftversorgung für so wichtige Systeme wie Bremsen sicherzustellen, wird in der Regel eine Rückfallebene bereitgestellt, die auch ohne elektronische Steuereinrichtung funktioniert. Allerdings entfällt dann auch die Möglichkeit gezielter Ansteuerung der Ventile. Beispielsweise lässt sich der Kompressor ohne elektronische Steuereinrichtung nicht mehr in einen Energiesparzustand versetzen, wenn ein Betriebsdruck der Druckluftversorgungseinrichtung erreicht ist. Dies kann dazu führen, dass der Kompressor über lange Zeit gegen einen hohen Druck weiter arbeitet, bis ein Sicherheitsventil bei einem Maximaldruck den Druck abbläst. Dies kann zu einer erheblichen Belastung des Kompressors führen, die beispielsweise durch Überhitzung sogar den Kompressor beschädigen kann. Bei ausgefallener elektronischer Steuerung ist in der Regel auch keine Regenerierung des Luftfilters mehr möglich. Dadurch besteht die Gefahr, dass Luftfilter und nachfolgende Verbrauchersysteme, insbesondere die Bremssysteme, nass gefahren werden.

Die US 2009/0195058 A1 beschreibt ein Bremssystem und ein zugehöriges Verfahren, bei dem eine voraussichtliche Temperaturänderung einer Bremskomponente abgeschätzt wird, und ein Bremssystem und ein zugehöriges Verfahren zum Betätigen einer Feststellbremse.

Die EP 1 596 089 und die EP 1 596 090 beschreiben Feststellbremsvorrichtungen, die zum Zuspannen der Feststellbremse elektromechanische Komponenten anstelle von Federspeicherbremszylindern verwenden.

Die GB 2 284 458 beschreibt ein druckbetriebenes Bremssystem für einen Fahrzeugzug mit einem Zugfahrzeug, einem Anhänger und einem weiteren Anhänger, wobei ein druckbasiertes Bremsanforderungssignal an den Anhänger und den weiteren Anhänger ausgebbar ist.

Es ist eine Aufgabe der vorliegenden Erfindung, bei einer elektronisch gesteuerten Druckluftversorgungseinrichtung eine Rückfallebene bereitzustellen, die rein pneumatisch einen verbesserten Betrieb insbesondere des Kompressors und der Regenerierung ermöglicht.

Diese Aufgabe wird mit den Merkmalen des unabhängigen Anspruchs gelöst.

Vorteilhafte Ausführungsformen der Erfindung sind in den abhängigen Ansprüchen angegeben.

Erfindungsgemäß ist eine Druckluftversorgungseinrichtung für Nutzfahrzeuge vorgesehen, wobei die Druckluftversorgungseinrichtung mit einer elektronischen Steuereinrichtung elektrisch verbunden oder verbindbar ist. Die Druckluftversorgungseinrichtung weist mindestens ein Steuerventil auf, das über die elektronische Steuereinrichtung ansteuerbar ist. Das Steuerventil weist mindestens einen Eingangsanschluss, einen Entlüftungsanschluss und einen Ausgangsanschluss auf. Ferner weist die Druckluftversorgungseinrichtung eine Steuerleitung auf, die mit dem Ausgangsanschluss des Steuerventils verbunden ist, wobei die Steuerleitung mit einem Steuereingang eines Kompressors und/oder einem Eingang eines Regenerierungsventils verbunden oder verbindbar ist, sowie eine Versorgungsleitung, über die Druckluft zu dem Eingangsanschluss des Steuerventils geführt oder führbar ist, und eine Entlüftungsleitung, die mit dem Entlüftungsanschluss des Steuerventils verbunden ist, wobei das Steuerventil über die Entlüftungsleitung entlüftbar ist. Das Steuerventil ist ferner derart ausgebildet, dass es bei einem vorbestimmten Öffnungsdruck in der Versorgungsleitung pneumatisch eine fluidleitende Verbindung zwischen dem Eingangsanschluss und dem Ausgangsanschluss derart hergestellt, dass die Steuerleitung belüftet wird. Das Herstellen einer fluidleitenden Verbindung zwischen dem Eingangsanschluss und dem Ausgangsanschluss aufgrund des Öffnungsdrucks in der Versorgungsleitung kann allgemein als pneumatisches Öffnen des Steuerventils bezeichnet werden. Insbesondere kann vorgesehen sein, dass das Steuerventil derart ausgebildet ist, dass die fluidleitende Verbindung zwischen dem Eingangsanschluss und dem Ausgangsanschluss unabhängig von der Ansteuerung durch die elektronische Steuereinrichtung hergestellt ist. Somit kann über das ansonsten über die elektronische Steuereinrichtung gesteuerte Steuerventil rein pneumatisch ein Druckaufbau in der Steuerleitung erreicht werden, wenn der Druck in der Versorgungsleitung den Öffnungsdruck erreicht oder überschreitet. Die Ansteuerung des Steuerventils durch die elektronische Steuereinrichtung kann indirekt oder direkt elektrisch erfolgen, beilspielsweise durch Bestromung elektromagnetischer Komponenten des Ventils. Das Steuerventil kann insbesondere als Magnetventil ausgebildet sein. Es ist auch vorstellbar, dass das Steuerventil zusätzlich zu einem pneumatischen Ventil eine Magnetventilkomponente zur Vorsteuerung des pneumatischen Ventils aufweist, die durch die elektronische Steuereinrichtung angesteuert wird. Das Steuerventil kann als 3/2-Wegeventil ausgebildet sein. In einer Normalstellung kann das Steuerventil derart geschaltet sein, dass es die Steuerleitung mit der Entlüftungsleitung verbindet, also dass eine fluidleitende Verbindung zwischen dem Ausgangsanschluss und dem Entlüftungsanschluss besteht. Der Eingangsanschluss und somit die Versorgungsleitung können in der Normalstellung abgesperrt sein. Somit kann in Normalstellung die Steuerleitung entlüftet oder entlüftbar sein. In einer Durchlassstellung kann das Steuerventil derart geschaltet sein, dass es die Steuerleitung fluidleitend mit der Versorgungsleitung verbindet und die Entlüftungsleitung absperrt. Somit sind der Eingangsanschluss und der Ausgangsanschluss fluidleitend miteinander verbunden und der Entlüftungsanschluss ist abgesperrt. Die elektronische Steuereinrichtung kann es vermögen, das Steuerventil zwischen der Normalstellung und der Durchlassstellung umzuschalten. Es kann zweckmäßig sein, das Steuerventil derart auszubilden, dass es die Normalstellung einnimmt, wenn es nicht über die elektronische Steuereinrichtung angesteuert ist und/oder nicht bestromt ist. Dazu kann beispielsweise eine Rückstelleinrichtung wie eine Federanordnung vorgesehen sein, welche das Steuerventil in die Normalstellung vorspannt. Das Steuerventil kann derart ausgebildet sein, dass es in oder aus der Normalstellung und/oder dann, wenn es nicht bestromt ist, bei einem vorbestimmten Öffnungsdruck in der Versorgungsleitung pneumatisch öffnet, so dass die Steuerleitung belüftet wird. Es ist vorstellbar, dass dann, wenn das Steuerventil aufgrund des Öffnungsdrucks in der Versorgungsleitung pneumatisch öffnet, das Steuerventil nicht vollständig in die Durchlassstellung geschaltet wird, sondern eine als Öffnungsstellung bezeichnete Zwischenstellung annimmt. Das pneumatische Öffnen kann somit auch als Schalten in die Öffnungsstellung bezeichnet werden. Es kann beispielsweise sein, dass in der Öffnungsstellung der Entlüftungsanschluss nicht oder nicht vollständig abgesperrt ist. Die elektronische Steuereinrichtung kann als Teil der Druckluftversorgungseinrichtung angesehen werden oder separat davon ausgebildet sein. Die Druckluftversorgungseinrichtung kann den Kompressor umfassen, oder als vom Kompressor separate oder separierbare Einrichtung angesehen werden. Die Steuerleitung kann insbesondere mit einem Kompressorsteuereingang verbunden oder verbindbar sein, über den der Kompressor pneumatisch angesteuert werden kann. Es ist beispielsweise vorstellbar, dass der Kompressor dann, wenn auf seinem Steuereingang ein Druck anliegt, in einen Energiesparmodus schaltet. In einem Energiesparmodus kann der Kompressor beispielsweise von einem Antrieb oder einer Welle entkuppelt oder ausgeschaltet sein. Liegt kein Druck auf dem Steuereingang des Kompressors, kann der Kompressor derart betrieben sein, dass er Druckluft für die Druckluftversorgungsanlage liefert. Die Versorgungsleitung kann insbesondere zur Verteilung von Druckluft auf Verbrauchersystem wie beispielsweise Bremsen, eine Luftfederung, einen Anhänger oder ähnliches dienen. Ein Regenerierungsventil kann ein Ventil sein, über das eine Regenerierung eines Luftfilters der Druckluftversorgungsanlage erfolgt und/oder gesteuert wird. Insbesondere kann ein Rückschlagventil in einer Regenerierungsleitung als ein Regenerierungsventil angesehen werden. Der Luftfilter kann Teil der Druckluftversorgungsanlage sein. Es ist insbesondere vorstellbar, dass die Druckluftaufbereitungseinrichtung ein analog zum dem Steuerventil ausgebildetes zweites Steuerventil mit einem vorbestimmten zweiten Öffnungsdruck aufweist. Das zweite Steuerventil kann allgemein die für das Steuerventil erwähnten Eigenschaften und Merkmale aufweisen. Der zweite Öffnungsdruck kann dem ersten Öffnungsdruck entsprechen oder gleich sein. Es kann zweckmäßig sein, wenn der zweite Öffnungsdruck sich von dem ersten Öffnungsdruck unterscheidet. Insbesondere kann vorgesehen sein, dass ein als zweiter Eingangsanschluss bezeichneter Eingangsanschluss des zweiten Steuerventils mit der Steuerleitung verbunden oder verbindbar ist, die in diesem Fall dann als Versorgungsleitung für das zweite Steuerventil wirkt. Dabei kann das zweite Steuerventil insbesondere ein Regenerierungsventil sein. Somit kann das zweite Steuerventil pneumatisch in seine Öffnungsstellung geschaltet werden, wenn das Steuerventil in Öffnungsstellung ist. Es kann vorteilhaft sein, wenn ein erstes Steuerventil über seine Steuerleitung mit einem Kompressorsteuereingang und mit dem zweiten Eingangsanschluss eines zweiten Steuerventils verbunden oder verbindbar ist, welches als Regenerierungsventil dient. Im Rahmen dieser Beschreibung stellt eine Verbindung oder fluidleitende Verbindung zwischen zwei pneumatischen Komponenten oder einer Leitung und einer pneumatischen Komponente wie einem Ventil eine pneumatische Verbindung dar, so dass Druckluft über die Verbindung geführt werden kann. Ein Nutzfahrzeug kann insbesondere ein Lastkraftwagen oder ein mobiles Arbeitsgerät sein, wie beispielsweise ein Traktor. Auch ein Schienenfahrzeug kann als ein Nutzfahrzeug angesehen werden. Allgemein kann es zweckmäßig sein, wenn der vorbestimmte Öffnungsdruck und/oder gegebenenfalls der zweite Öffnungsdruck größer ist als ein Betriebsdruck der Druckluftversorgungseinrichtung. Der Betriebsdruck kann durch die elektronische Steuereinrichtung vorgegeben und/oder überwacht sein. Beispielsweise kann die elektronische Steuereinrichtung dazu ausgebildet sein, bei Erreichen des Betriebsdrucks die Druckluftzufuhr zu Stoppen, etwa indem der Kompressor in seinen Energiesparmodus geschaltet wird. Es kann vorgesehen sein, dass die elektronische Steuereinrichtung den Druck in der Druckversorgungseinrichtung an einer oder mehreren Stellen durch geeignete Sensoren erfasst, und bei Erreichen des gewünschten Betriebsdrucks den Kompressor abschaltet oder entkuppelt. Dazu kann ein geeignetes Magnetventil angesteuert werden, um ein Drucksignal auf die Kompressorsteuerleitung zu geben. Das Magnetventil kann als oben beschriebenes Steuerventil angesehen werden. Ein Betriebsdruck kann beispielsweise bei etwa 12 oder 12,5 bar liegen. Der Betriebsdruck kann insbesondere in der Versorgungsleitung bestimmt werden. Beispielsweise kann der Öffnungsdruck zwischen 13 bar und 14 bar liegen, etwa bei 13 bar, 13,5 bar oder 14 bar. Zur Absicherung der Druckluftversorgungseinrichtung kann ein maximaler Sicherungsdruck vorgesehen sein, den die Einrichtung auf keinen Fall überschreiten darf. Um ein Überschreiten dieses Sicherungsdruckes zu vermeiden, kann ein Sicherheitsventil verwendet werden, welches bei Überschreiten des Sicherungsdrucks ein Entlüften zur Atmosphäre vornimmt. Zweckmäßigerweise liegt der Öffnungsdruck und/oder gegebenenfalls der zweite Öffnungsdruck unterhalb dieses Sicherungsdruckes. Somit kann der Öffnungsdruck eines Steuerventils zwischen dem Betriebsdruck und dem Sicherungsdruck liegen. Es ist auch vorstellbar, dass das herkömmliche Sicherungsventil durch das Steuerventil ersetzt ist. Denn wenn die an das beschriebene Steuerventil angeschlossene Steuerleitung zur Umschaltung des Kompressors und/oder zum Ablassen von Druck verbunden ist, beispielsweise mit einer Entlüftung zur Atmosphäre oder einem Ablassventil einer Entlüftung oder durch Einleiten einer Regenerierung, kann pneumatisch sichergestellt werden, dass der Öffnungsdruck nicht überschritten wird. Somit kann in diesem Fall der Öffnungsdruck als Sicherungsdruck angesehen werden. Im Rahmen dieser Beschreibung kann ferner als wirksamer Strömungsquerschnitt in einer Leitung, Verbindung oder in einem Ventil jeweils der minimale Strömungsquerschnitt angesehen werden, der bei der betrachteten Strömung eine für die Strömung relevante Rolle spielt. Der Öffnungsdruck eines Steuerventils kann durch geeignete Auslegung des Ventils eingestellt sein, etwa indem eine Federanordnung entsprechend eingestellt wird.

Die Druckluftversorgungseinrichtung kann derart ausgebildet sein, dass ein zum Entlüften des Steuerventils wirksamer Entlüftungsströmungsquerschnitt kleiner ist als ein zum Belüften der Steuerleitung über das Steuerventil wirksamer Steuerströmungsquerschnitt. Somit kann sichergestellt werden, dass sogar dann, wenn sich das Steuerventil durch pneumatische Ansteuerung über die Versorgungsleitung in einer Zwischenstellung befindet, in dem Entlüftungsanschluss, Eingangsanschluss und Ausgangsanschluss fluidleitend miteinander verbunden sind, ein Druckaufbau in der Steuerleitung zuverlässig erfolgen kann. Allgemein können die für bestimmte Strömungen wirksamen Strömungsquerschnitte im zugehörigen Ventil und/oder in zugehörigen Leitungen eingestellt oder definiert sein. Bei der Einstellung von Strömungsquerschnitten können generell der Öffnungsdruck und seine Auswirkungen auf die freigelegten Öffnungen des Ausgangsanschlusses und Entlüftungsanschlusses berücksichtigt werden.

Bei einer Weiterbildung kann vorgesehen sein, dass ein zum Führen von Druckluft in das Steuerventil über die Versorgungsleitung und den Eingangsanschluss wirksamer Versorgungsströmungsquerschnitt größer ist als ein zum Entlüften des Steuerventils wirksamer Entlüftungsströmungsquerschnitt und/oder als ein zum Belüften der Steuerleitung über das Steuerventil wirksamer Steuerströmungsquerschnitt. Somit kann über die Versorgungsleitung ein ausreichendes Maß an Druckluft zugeführt werden, um eine zu starke Entlüftung über den Entlüftungsanschluss und die Entlüftungsleitung zu verhindern. Es kann auch ein ausreichend hoher Druckaufbau durch Belüftung der Steuerleitung erreicht werden. Der für die Luftzufuhr über den Eingangsanschluss wirksame Strömungsquerschnitt kann gleich groß oder größer ausgebildet sein als die Summe der für die Entlüftung über den Entlüftungsanschluss und den Druckaufbau über den Ausgangsanschluss wirksamen Strömungsquerschnitte.

Insbesondere kann in der Entlüftungsleitung eine Drossel vorgesehen sein, welche einen minimalen Strömungsquerschnitt für eine Entlüftung über den Entlüftungsanschluss definieren kann. Somit kann auf eine einfache Art ein geeigneter wirksamer Entlüftungsströmungsquerschnitt definiert werden, ohne eine Veränderung an einem herkömmlichen Steuerventil vornehmen zu müssen.

Es kann vorgesehen sein, dass ein zum Entlüften des Steuerventils wirksamer Strömungsquerschnitt des Entlüftungsanschlusses kleiner ist als der zum Belüften der Steuerleitung über das Steuerventil wirksamer Strömungsquerschnitt des Steueranschlusses. Auf diese Art kann sichergestellt werden, dass unabhängig von einer Leitungsführung die gewünschten Strömungsverhältnisse bereits durch das Steuerventil definiert sind.

Es ist vorstellbar, dass ein zum Führen von Druckluft in das Steuerventil wirksamer Strömungsquerschnitt des Eingangsanschlusses größer als ein zum Entlüften des Steuerventils wirksamer Strömungsquerschnitt des Entlüftungsanschlusses und/oder als ein zum Belüften der Steuerleitung über das Steuerventil wirksamer Strömungsquerschnitt des Ausgangsanschlusses ist. Somit kann bereits durch geeignete Dimensionierung der Anschlüsse des Steuerventils sichergestellt sein, dass im Rückfallmodus ein Druckaufbau in der Steuerleitung möglich ist. Der für die Luftzufuhr über den Eingangsanschluss wirksame Strömungsquerschnitt kann gleich groß oder größer ausgebildet sein als die Summe aus dem für die Entlüftung wirksamen Strömungsquerschnitt des Entlüftungsanschlusses und dem für den Druckaufbau wirksamen Strömungsquerschnitt des Ausgangsanschlusses.

In der Steuerleitung kann ein Schnellentlüftungsventil vorgesehen sein. Ein solches Schnellentlüftungsventil kann insbesondere eine schnellere Entlüftung der Steuerleitung erlauben, als über das Steuerventil möglich wäre. Dabei kann vorgesehen sein, dass eine Entlüftung über das Schnellentlüftungsventil durch eine Umschaltung des Steuerventils von der Öffnungsstellung in die Normalstellung ausgelöst wird, bei der eine fluidleitende Verbindung zwischen dem Eingangsanschluss und dem Entlüftungsanschluss des Steuerventils hergestellt wird und/oder die Verbindung zwischen dem Eingangsanschluss und dem Ausgangsanschluss unterbrochen wird. Allgemein kann ein Schnellentlüftungsventil ein 3/2-Wegeventil sein. Generell kann ein Ventil als ein Schnellentlüftungsventil angesehen werden, welches einen Eingangsanschluss, einen Ausgangsanschluss und einen Entlüftungsanschluss aufweist. Bei einem Schnellentlüftungsventil kann dann, wenn der Eingangsanschluss entlüftet ist, der Ausgangsanschluss über den Entlüftungsanschluss entlüftet sein. Wenn der Eingangsanschluss belüftet ist, kann das Schnellentlüftungsventil den Ausgangsanschluss mit dem Eingangsanschluss verbinden und den Entlüftungsanschluss absperren.

Es kann zweckmäßig sein, wenn ein zum Entlüften der Steuerleitung über das Schnellentlüftungsventil wirksamer Strömungsquerschnitt größer ist als ein zum Entlüften des Steuerventils über die Entlüftungsleitung wirksamer Strömungsquerschnitt. Somit wird sichergestellt, dass eine schnelle Entlüftung über das Schnellentlüftungsventil erfolgen kann.

Das Steuerventil kann derart ausgebildet sein, dass es bei einem vorbestimmten Schließdruck in der Versorgungsleitung eine fluidleitende Verbindung zwischen dem Eingangsanschluss und dem Ausgangsanschluss unterbricht. Insbesondere kann vorgesehen sein, dass diese fluidleitende Verbindung bei einem Abfall des Drucks in der Versorgungsleitung bis zum Schließdruck unterbrochen wird, nachdem das Steuerventil pneumatisch geöffnet hat. Das Steuerventil kann somit abhängig vom Druck in der Versorgungsleitung pneumatisch aus der Öffnungsstellung in eine andere Stellung umschalten, bevorzugt in die Normalstellung. Das Unterbrechen der Verbindung zwischen dem Eingangsanschluss und dem Ausgangsanschluss kann insbesondere dann erfolgen, wenn sich das Steuerventil im stromlosen Zustand befindet beziehungsweise keine Ansteuerung durch die elektronische Steuereinrichtung erfolgt. Allgemein kann der Schließdruck eines Steuerventils durch geeignete Auslegung des Ventils eingestellt werden, etwa indem eine Federanordnung entsprechend eingestellt wird.

Es ist vorstellbar, dass das Steuerventil derart ausgebildet ist, dass es bei einem Unterschreiten eines vorbestimmten Schließdrucks in der Versorgungsleitung eine fluidleitende Verbindung zwischen dem Ausgangsanschluss und dem Entlüftungsanschluss herstellt. Somit kann über das Steuerventil ein Entlüften der Steuerleitung erfolgen beziehungsweise eingeleitet werden.

Der Schließdruck kann geringer sein als der Öffnungsdruck. Dabei kann das Steuerventil insbesondere derart eingestellt sein, dass es eine Hysterese aufweist. Somit kann ein Druckbereich festgelegt werden, in welchem das Steuerventil pneumatisch geöffnet ist, um den Kompressor möglichst lange zu entlasten. Der Schließdruck kann unterhalb des Betriebsdrucks oder etwa im Bereich des Betriebsdrucks liegen.

Es versteht sich, dass die genannten Merkmale für ein Steuerventil analog auch für ein eventuell vorgesehenes zweites Steuerventil mit einem zweiten Öffnungsdruck gelten können.

Die Erfindung wird nun mit Bezug auf die begleitenden Zeichnungen anhand besonders bevorzugter Ausführungsformen beispielhaft erläutert.

Es zeigen:
- Figur 1: eine schematische Teildarstellung einer Druckluftversorgungseinrichtung; und
- Figur 2: eine Schnittansicht für ein beispielhaftes Magnetventil.

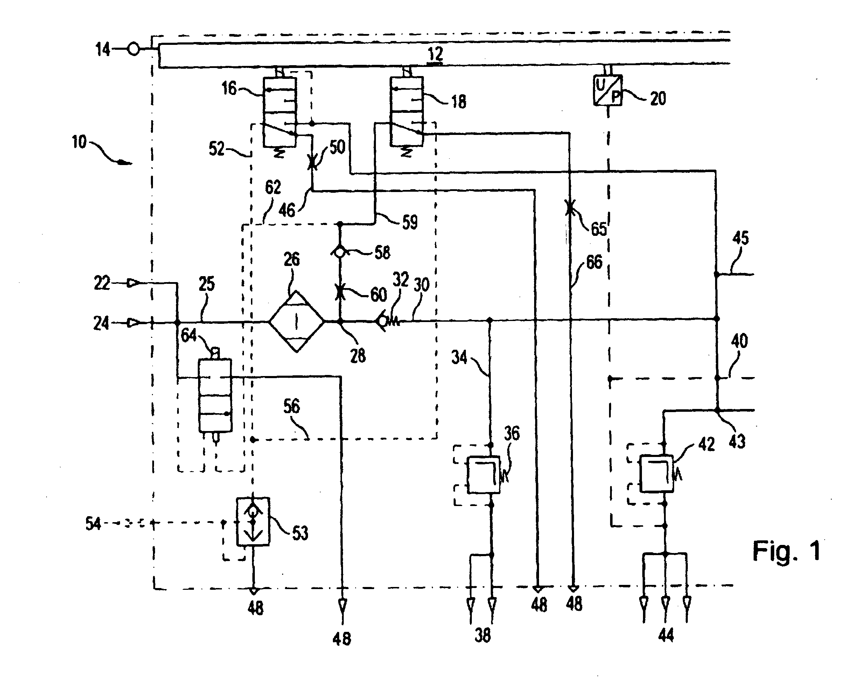

In der Figur 1 stellen durchgezogene Linien und kurz gestrichelte Linien Druckluftverbindungen dar, während lang gestrichelte Linien elektrische Signalleitungen darstellen.

In Figur 1 ist ein Teil einer Druckluftversorgungseinrichtung 10 schematisch dargestellt. Die Druckluftaufbereitungseinrichtung 10 umfasst eine elektronische Steuereinrichtung 12. Diese ist über einen Zentralstecker 14 mit einer Fahrzeugelektronik verbunden oder verbindbar. Die elektronische Steuereinrichtung 12 ist dazu ausgebildet, beispielsweise ein erstes Magnetventil 16 und ein zweites Magnetventil 18 elektrisch anzusteuern. Ein Drucksensor 20 kann ein Drucksignal an die elektronische Steuereinrichtung 12 weitergeben, welches in diesem Beispiel den Druck in einem Verbrauchersystem hinter einem weiter unten beschriebenen Überströmventile angibt. Die Druckluftversorgungseinrichtung 10 weist einen Kompressoranschluss oder Drucklufteingang 22 auf, über den Druckluft von einem Kompressor bereitgestellt werden kann. Über einen externen Anschluss oder Drucklufteingang 24 kann eine externe Befüllung der Druckluftversorgungseinrichtung 10 beziehungsweise daran angeschlossener Verbraucher von außen unter Umgehung des Kompressors erfolgen. Die beiden Eingänge 22, 24 sind über eine Eingangsleitung 25 an einen Luftfilter 26 angeschlossen, der dazu dient, Verunreinigungen aus der Druckluftversorgungseinrichtung zugeführter Luft herauszufiltern, etwa Wasser oder Öl. Hinter dem Luftfilter 26 ist eine Verbindungsleitung 28 zu einer Versorgungsleitung 30 vorgesehen, die durch den Luftfilter 26 gereinigte Druckluft zu einem Eingangsanschluss des ersten Magnetventils 16 führt oder führen kann. Um die Versorgungsleitung 30 gegen einen Druckverlust abzusichern, ist zwischen der Verbindungsleitung 28 und der Versorgungsleitung 30 ein Rückschlagventil 32 vorgesehen. Das Rückschlagventil ist stromabwärts des Luftfilters 26 zu der Versorgungsleitung 30 derart angeordnet, dass Luft nicht über die Versorgungsleitung 30 zum Luftfilter 26 zurückströmen kann. Hinter dem Rückschlagventil 32 zweigt eine Druckluftleitung 34 von der Versorgungsleitung 30 ab. Die Druckleitung 34 führt in diesem Beispiel über ein erstes Überströmventil 36 zu Anschlüssen 38 zur Versorgung einer nicht gezeigten Luftfederanlage.

Hinter der Druckluftversorgungsleitung 34 zweigt eine weitere Druckluftversorgungsleitung 40 von der Versorgungsleitung 30 ab. Diese führt in diesem Beispiel über eine Verzweigung 43 zu einem zweiten Überströmventil 42 und weiter zu Anschlüssen 44 für die Versorgung eines nicht gezeigten ersten Bremskreises. Von der Verzweigung 43 führt eine nicht näher bezeichnete zweite Abzweigung über ein nicht gezeigtes Überströmventil zu einem weiteren Verbraucher, beispielsweise einem zweiten Bremskreises. Ähnlich kann von der Versorgungsleitung 30 über eine weitere Abzweigung 45 eine Versorgung weiterer Druckluftverbraucher erfolgen, wie beispielsweise Anhängerbremsen, einer Feststellbremse oder ähnlicher bekannter Verbrauchereinrichtungen eines Nutzfahrzeugs. Die Sensoreinrichtung 20 ist dazu vorgesehen, den Druck hinter dem Überströmventil 42 und hinter weiteren, nicht gezeigten, Überströmventilen zu überwachen.

Die Versorgungsleitung 30 ist weiterhin mit einem Eingangsanschluss des ersten Magnetventils 16 verbunden. Ein Entlüftungsausgang des ersten Magnetventils 16 ist an eine Entlüftungsleitung 46 angeschlossen, die mit einer Entlüftung 48 verbunden ist. Die Entlüftung 48 entlüftet die Entlüftungsleitung 46 zur Atmosphäre. In der Entlüftungsleitung 46 ist in diesem Beispiel eine Drossel 50 vorgesehen. An einen Ausgangsanschluss des ersten Magnetventils 16 ist eine Steuerleitung 52 angeschlossen. Das erste Magnetventil ist als 3/2-Wegeventil ausgebildet. Die Steuerleitung 52 führt in diesem Beispiel über ein Schnellentlüftungsventil 53 zu einem Steuereingang 54 eines nicht gezeigten Kompressors. Es ist vorgesehen, dass dann, wenn die Steuerleitung 52 belüftet ist, also über die Versorgungsleitung 30 ein Druck oberhalb des Atmosphärendrucks in ihr vorliegt, der Kompressor in einen Energiesparmodus geschaltet wird, etwa indem er ausgekuppelt oder ganz ausgeschaltet wird oder sein Förderstrom stark herabgesetzt wird. Von der Steuerleitung 52 zweigt eine Regenerierungssteuerleitung 56 ab, die an einen Eingangsanschluss des zweiten Magnetventils 18 angeschlossen ist und als mit dem zweiten Magnetventil 18 verbundene Versorgungsleitung wirkt. Ein Entlüftungsanschluss des zweiten Magnetventils 18 ist über eine Entlüftungsleitung 66 mit einer Entlüftung 48 verbunden. Ein Ausgangsanschluss des zweiten Magnetventils 18 ist über eine Regenerierungsleitung 59 mit der Verbindungsleitung 28 zwischen dem Luftfilter 26 und dem Rückschlagventil 32 verbunden. In die Regenerierungsleitung 59 sind hintereinander ein Regenerierungsrückschlagventil 58 und eine Regenerierungsdrossel 60 geschaltet. Die Regenerierungsleitung 59 kann als mit dem zweiten Magnetventil 18 verbundene Steuerleitung angesehen werden. Ferner können das zweite Magnetventil 18 und das Regenerierungsrückschlagventil 58 jeweils als ein Regenerierungsventil angesehen werden. In dem Fall, dass eine Regenerierung durchgeführt wird, verhindert das Regenerierungsrückschlagventil 58, dass für die Regenerierung vorgesehene Luft wieder in Richtung des zweiten Magnetventils 18 in die Leitung 59 strömt. Über die Regenerierungsdrossel 60 wird eine für die Regenerierung geeignete Strömung eingestellt. Zwischen dem Regenerierungsrückschlagventil 58 und dem zweiten Magnetventil 18 zweigt eine Abschaltventilsteuerleitung 62 von der Regenerierungsleitung 59 ab. Die Ablasssteuerleitung 62 führt zu einem Ablassventil 64. Das Ablassventil 64 kann als 2/2-Wegeventil ausgebildet sein. Im Normalzustand, dann, wenn kein Drucksignal über die Ablasssteuerleitung 62 das Ablassventil 64 ansteuert, sperrt das Ablassventil 64 eine Verbindungsleitung zwischen der Eingangsleitung 25 und einer Entlüftung 48 zur Atmosphäre. Wird über die Ablasssteuerleitung 62 ein Drucksignal auf das Ablassventil 64 gegeben, schaltet es in seine Durchgangsstellung, in der es die Eingangsleitung 25 mit der Entlüftung 48 fluidleitend verbindet. Eine derartige Verbindung wird durch das Ablassventil 64 auch dann hergestellt, wenn der Druck in der Eingangsleitung 25 beziehungsweise in der Druckluftversorgungseinrichtung 10 einen vorbestimmten Sicherungsdruck, der bei etwa 14 bar oder 15 bar liegen kann, überschreitet. Über das Ablassventil 64 kann eine Regenerierung des Luftfilters 26 erfolgen, indem eine Entlüftungsmöglichkeit für aus der Regenerierungsleitung 59 stammende und den Luftfilter 26 durchströmende Luft geschaffen wird. Wie man in der Figur 1 erkennt, hat auch die Versorgungsleitung 30 beziehungsweise der darin vorhandene Leitungsdruck oder Versorgungsdruck eine Steuerfunktion für das erste Magnetventil 16. Dieses ist nämlich derart eingestellt, dass dann, wenn in der Versorgungsleitung 30 ein gewisser vorbestimmter Öffnungsdruck erreicht oder überschritten wird, das erste Magnetventil 16 pneumatisch in einen Öffnungszustand versetzt wird, der weiter unten detaillierter beschrieben ist. Die erwähnten Entlüftungen 48 können separate Ausgänge zur Atmosphäre sein oder zu einem oder mehreren Ausgängen zusammengeschaltet sein.

Im Betrieb wird über den Kompressor die Druckluftversorgungseinrichtung 10 mit Druckluft versorgt. Die Druckluft strömt über die Eingangsleitung 25 durch den Luftfilter 26 und die Verbindungsleitung 28 sowie das Rückschlagventil 32 in die Versorgungsleitung 30. Über diese kann sie sich über Überströmventile, beispielsweise die Überströmventile 36 und 42, und die Abzweigungen 43, 44 auf die Verbrauchersysteme verteilen. Gleichzeitig liegt der Druck in der Versorgungsleitung 30 am Eingangsanschluss des ersten Magnetventils 16 an. Das erste Magnetventil 16 und das zweite Magnetventil 18 befinden sich stromlos, also dann, wenn sie nicht von der elektronischen Steuereinrichtung 12 angesteuert werden, jeweils in einer Normalstellung. In der Normalstellung ist im Ventil der Ausgangsanschluss eines Magnetventils 16, 18 jeweils mit dem Entlüftungsausgang desselben Magnetventils 16, 18 verbunden, während der Eingangsanschluss abgesperrt ist. Somit ist im gezeigten stromlosen Zustand der mit der Steuerleitung 52 verbundene Ausgangsanschluss des ersten Magnetventils 16 mit dem Entlüftungsanschluss verbunden, der über die Drossel 50 und die Entlüftungsleitung 46 mit der Entlüftung 48 verbunden ist. Im gezeigten stromlosen Zustand ist das zweite Magnetventil 18 derart geschaltet, dass die Regenerierungsleitung 59 mit dem Entlüftungsanschluss des zweiten Magnetventils 18 und somit mit der Entlüftung 48 verbunden ist. Im bestromten Zustand sind das erste Magnetventil 16 und das zweite Magnetventil 18 in Durchlassstellung geschaltet. In der Durchlassstellung sind jeweils der Eingangsanschluss und der Ausgangsanschluss fluidleitend miteinander verbunden, während der Entlüftungsanschluss abgesperrt ist. Somit ist in der Durchlassstellung der mit der Steuerleitung 52 verbundene Ausgangsanschluss des ersten Magnetventils 16 mit dem mit der Versorgungsleitung 30 verbundenen Eingangsanschluss fluidleitend verbunden. Das zweite Magnetventil 18 ist in der Durchlassstellung derart geschaltet, dass die Regenerierungssteuerleitung 56 über den Eingangsanschluss des zweiten Magnetventils 18 fluidleitend über den Ausgangsanschluss des zweiten Magnetventils 18 mit der Regenerierungsleitung 59 verbunden ist. Erreicht der Druck innerhalb der Druckluftversorgungseinrichtung 10 einen bestimmten vorgegebenen Betriebsdruck, der beispielsweise bei etwa 12,5 bar liegen kann, schaltet die elektronische Steuereinrichtung 12 den Kompressor ab. Dazu wird das erste Magnetventil 16 in seine Durchlassstellung geschaltet, so dass über die Versorgungsleitung 30 die Steuerleitung 52 belüftet wird und somit der hohe Betriebsdruck anliegt. Der Druck auf der Steuerleitung 52 wird einerseits über das Schnellentlüftungsventil 53 und den Anschluss 54 an den Kompressor weitergegeben, der daraufhin in seinen Energiesparzustand schaltet. Des Weiteren liegt der Druck in der Steuerleitung 52 auch am Eingangsanschluss des zweiten Magnetventils 18 an. Wird nun auch das zweite Magnetventil 18 von der elektronischen Steuereinrichtung 12 in seine Durchlassstellung geschaltet, kann Druckluft von der Versorgungsleitung 30 über das erste Magnetventil 16, die Steuerleitung 52, die Regenerierungssteuerleitung 56 und das zweite Magnetventil 18 in die Regenerierungsleitung 59 strömen. Somit wird einerseits über die Ablasssteuerleitung 62 das Ablassventil 64 in seine Durchlassstellung geschaltet. Andererseits kann Druckluft über das Regenerierungsrückschlagventil 58, die Regenerierungsdrossel 60 und den Luftfilter 26 zum einen Eingangsanschluss des Ablassventils 64 strömen. Über dieses wird eine Verbindung zur Entlüftung 48 hergestellt, so dass Druckluft entgegen der herkömmlichen Strömungsrichtung durch den Luftfilter 26 strömen kann, um diesen zu regenerieren. Somit kann die elektronische Steuereinrichtung 12 durch Ansteuerung des ersten Magnetventils 16 einen Energiesparmodus für den Kompressor ansteuern. Zusätzlich kann durch Ansteuerung des zweiten Magnetventils 18 eine Regenerierung des Luftfilters 26 vorgenommen werden. Wird das erste Magnetventil 16 wieder in seine Normalstellung geschaltet, wird die Steuerleitung 52 mit der Entlüftungsleitung 46 verbunden. Luft strömt somit aus der Steuerleitung 52 hinaus. Dadurch wird das Schnellentlüftungsventil 53 derart geschaltet, dass es den Kompressorsteuereingang 54 mit der Entlüftung 48 verbindet und entlüftet. Eine Entlüftung der Leitung vom Schnellentlüftungsventil 53 zum Kompressor erfolgt somit über den verhältnismäßig großen Strömungsquerschnitt des Schnellentlüftungsventils 53. Somit wird ein schneller Druckabfall in der Leitung zum Kompressor erreicht, wodurch der Kompressor schnell in seinen Betriebszustand versetzt wird. Ferner wird über die Versorgungsleitung 30 kein weiterer Druck zum zweiten Magnetventil 18 nachgeliefert, wodurch die Regenerierung gestoppt wird. Zweckmäßigerweise wird außerdem das zweite Magnetventil 18 in seinen stromlosen Zustand versetzt, wodurch die Regenerierungsleitung 59 und die Ablasssteuerleitung 62 ebenfalls entlüftet werden. Das Ablassventil 64 sperrt daher die Verbindung zur Entlüftung. Sollte nun die elektronische Steuereinrichtung 12 ausfallen, würde der Kompressor den Druck in der Druckluftversorgungseinrichtung 10 bis zum Sicherungsdruck ansteigen lassen, woraufhin das Ablassventil 64 öffnet. Dabei müsste der Kompressor gegen einen hohen in der Druckluftversorgungseinrichtung 10 herrschenden Druck erhebliche Arbeit leisten, wodurch sich eine starke Belastung und eine Überhitzungsgefahr für den Kompressor ergeben. Um dies zu umgehen, ist vorgesehen, dass das erste Magnetventil 16 dazu in der Lage ist, bei einem Öffnungsdruck in der Versorgungsleitung 30 pneumatisch zu öffnen, der unterhalb des Sicherungsdrucks liegt, auch wenn kein elektrisches Steuersignal vorliegt. Dabei ist insbesondere vorgesehen, dass das erste Magnetventil 16 derart eingestellt ist, dass es pneumatisch bei einem Druck in der Versorgungsleitung 30 öffnet, der zwischen dem normalen Betriebsdruck, also etwa 12,5 bar, und einem maximal zugelassenen Druck, also etwa dem Sicherungsdruck von etwa 15 bar liegt. Liegt also über der Versorgungsleitung 30 ein entsprechender Öffnungsdruck an, wird das Magnetventil 16 in einen Zustand versetzt, in dem eine fluidleitende Verbindung zwischen dem Eingangsanschluss und dem Ausgangsanschluss des ersten Magnetventils 16 vorliegt. In diesem Beispiel ist vorgesehen, dass über die Drossel 50 nur eine schleichende Entlüftung stattfinden kann, so dass auch in einer Zwischenstellung, in der das erste Magnetventil 16 nicht vollständig in die Durchlassstellung geschaltet ist, auf jeden Fall eine Belüftung der Steuerleitung 52 stattfindet. Die Drossel 50 definiert einen minimalen Strömungsquerschnitt für das Entlüften des Entlüftungsanschlusses über die Leitung 46, der geringer ist als ein für die Zufuhr von Druckluft zur Steuerleitung 52 wirksamer minimaler Strömungsquerschnitt. Somit wird auch im stromlosen Zustand durch den Druckaufbau in der Steuerleitung 52 der Kompressor in den Energiesparmodus geschaltet. In dem hier gezeigten Beispiel ist vorgesehen, dass nur das erste Magnetventil 16 als ein derartiges pneumatisch öffnendes Steuerventil ausgestaltet ist, während das zweite Magnetventil 18 auch bei einem sehr hohen Druck in der mit der Steuerleitung 52 verbundenen Regenerierungssteuerleitung 56 nicht aus seinem Normalzustand bewegt wird. Es ist allerdings auch vorstellbar, das zweite Magnetventil 18 derart auszubilden, dass bei Anliegen eines oben beschriebenen zweiten Öffnungsdrucks das zweite Magnetventil 18 in eine Öffnungsstellung schaltet, so dass eine Regenerierung ohne entsprechende Steuerung durch die elektronische Steuereinrichtung 12 erfolgen kann, wenn der Kompressor in seinen Energiesparmodus geschaltet ist. Dazu kann optional eine Drossel 65 in der mit dem Entlüftungsausgang des zweiten Magnetventils 18 verbundenen Entlüftungsleitung 66 vorgesehen sein. Der Strömungsquerschnitt der Drossel 65 kann derart ausgebildet sein, dass in einer Zwischenstellung des zweiten Magnetventils 18 der für eine Strömung über den Ausgangsanschluss des zweiten Magnetventils 18 wirksame Strömungsquerschnitt größer ist als der Strömungsquerschnitt der Drossel 65, der für ein Entlüften des Magnetventils 18 wirksam ist. Damit kann ein ausreichender Luftstrom für die Regenerierung erreicht werden, der insbesondere somit größer als der über die Entlüftungsleitung 66 entweichende Luftstrom sein kann. Selbstverständlich kann analog der Strömungsquerschnitt des Entlüftungsanschlusses des zweiten Magnetventils 18 entsprechend ausgebildet sein, um die gewünschten Strömungsverhältnisse zu definieren.

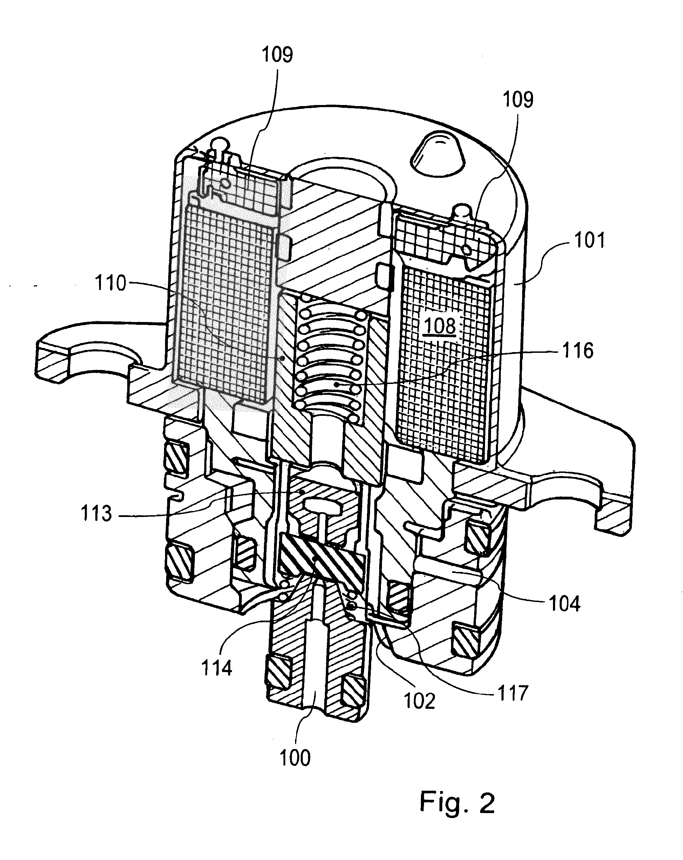

Figur 2 zeigt ein Beispiel für ein Magnetventil, das beispielsweise als erstes Magnetventil in Figur 1 verwendet werden kann. Das Magnetventil weist ein Gehäuse 101, einen Eingangsanscnluss 100, einen Ausgangsanschluss 102 und einen Entlüftungsanschluss 104 auf. Der Eingangsanschluss 100 kann beispielsweise mit einer Versorgungsleitung 30 wie in Figur 1 beschrieben verbunden sein. Ferner weist das Magnetventil als wesentliche Komponenten eine Spule 108, einen Anker 110 sowie ein Betätigungselement 112 auf. Das Betätigungselement 112 umgibt in diesem Falle einen Dichtgummi 114. Ferner ist eine Feder 116 vorgesehen, welche den Anker 110 gegen das Betätigungselement 112 vorspannt. Eine kleinere Feder 117 wirkt in der entgegengesetzten Richtung auf den Dichtgummi 114, also in Richtung auf die Spule 108 zu. Wird die Spule 108 nicht über Spulenanschlüsse 109 bestromt, drückt die Feder 116 auf den Anker 110 und das Betätigungselement 112, wodurch der Dichtgummi 114 eine Verbindung zwischen dem Eingangsanschluss 100 und dem Ausgangsanschluss 102 absperrt. In diesem Fall besteht eine Verbindung zwischen dem Ausgangsanschluss 102 und dem Entlüftungsanschluss 104. Diese Position entspricht der Normalstellung. Wird nun die Spule 108 bestromt, wird der Anker 110 gegen die Wirkung der Feder 116 angezogen, so dass die Vorspannung auf das Betätigungselement 112 aufgehoben ist. Die Feder 117 und ein eventuell am Eingangsanschluss 100 anliegender Druck bewegen den Dichtgummi 114 mit dem Betätigungselement 112 ebenfalls in Richtung der Spule 108, bis ein Anschlag an einem Anschlagselement 113 erfolgt, so dass sich eine fluidleitende Verbindung zwischen dem Eingangsanschluss 100 und dem Ausgangsanschluss 102 ergibt. Gleichzeitig wird der Entlüftungsanschluss 104 abgesperrt. Dies entspricht der Durchlassstellung. Selbst dann, wenn die Spule 108 nicht bestromt ist, kann allerdings ein Fall auftreten, in dem eine fluidleitende Verbindung zwischen dem Eingangsanschluss 100 und dem Ausgangsanschluss 102 erfolgt. Wenn nämlich ein ausreichend großer Druck am Eingangsanschluss 100 vorliegt, der über das Dichtungselement 114 derart auf das Betätigungselement 112 wirkt, dass der Anker 110 gegen die Federkraft 116 nach oben gedrückt werden kann, kann sich der Dichtgummi 114 vom Eingangsanschluss 100 abheben, um das Ventil pneumatisch zu öffnen. Dadurch kann eine fluidleitende Verbindung zwischen dem Eingangsanschluss 100 und dem Ausgangsanschluss 102 ermöglicht werden. Wenn der Öffnungsdruck ausreichend groß ist, dass er die Kraft der Feder vollständig überwindet und den Anker 110 an seinen oberen Anschlagpunkt triebt, wird auch der Entlüftungsanschluss 104 abgesperrt. Ist der Öffnungsdruck am Eingangsanschluss jedoch nicht ausreichend groß, die Entlüftung abzusperren, wird zwar eine fluidleitende Verbindung zwischen dem Eingangsanschluss 100 und dem Ausgangsanschluss 102 hergestellt, aber auch eine Entlüftung über den Entlüftungsausgang 104 möglich. Um sicherzustellen, dass über den Ausgangsanschluss 102, der vorzugsweise mit einer Steuerleitung wie der Steuerleitung 52 verbunden ist, ein Druckaufbau in dieser Leitung erfolgen kann, sollte demnach sichergestellt werden, dass eine Strömung über den Ausgangsanschluss 102 erfolgen kann, die größer ist als eine Strömung über den Entlüftungsanschluss 104. Dazu kann beispielsweise innerhalb des Magnetventils der für eine Strömung über den Entlüftungsanschluss 104 vorgesehene Strömungsquerschnitt geringer dimensioniert sein als der für eine Strömung über den Ausgangsanschluss 102 wirksame Strömungsquerschnitt. Alternativ oder zusätzlich kann auch eine entsprechende Drossel stromabwärts des Entlüftungsanschlusses vorgesehen sein, wie etwa die oben beschriebene Drossel 50. Darüber hinaus kann der zum Führen von Druckluft in das Magnetventil wirksame Strömungsquerschnitt am Eingangsanschluss 100 ausreichend groß dimensioniert sein, dass sich insgesamt eine ausreichende Strömung von Druckluft ergibt. Insbesondere kann dieser Strömungsquerschnitt größer sein als der für die Entlüftung wirksame Strömungsquerschnitt und der für die Strömung über den Ausgangsanschluss 102 wirksame Strömungsquerschnitt. Es kann vorgesehen sein, dass der Strömungsquerschnitt für die Luftzufuhr über den Eingangsanschluss 100 gleich groß oder größer ist als die Summe der für die Entlüftung und den Druckaufbau über den Ausgangsanschluss 102 wirksamen Strömungsquerschnitte im Ventil.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Druckluftversorgungseinrichtung
- 12: elektronische Steuereinrichtung
- 14: Zentralstecker
- 16: erstes Magnetventil
- 18: zweites Magnetventil
- 20: Sensoreinrichtung
- 22: Kompressoranschluss
- 24: externer Druckluftanschluss
- 26: Luftfilter
- 28: Verbindungsleitung
- 30: Versorgungsleitung
- 32: Rückschlagventil
- 34: Druckluftversorgungsleitung
- 36: Überschlagsventil
- 38: Versorgungsanschlüsse
- 40: zweite Druckluftversorgungsleitung
- 42: Überströmventil
- 43: Abzweigung
- 44: Verbraucheranschlüsse
- 45: Abzweigung
- 46: Entlüftungsleitung
- 48: Entlüftung
- 50: Drossel
- 52: Steuerleitung
- 53: Schnellentlüftungsventil
- 54: Kompressorsteueranschluss
- 56: Regenerierungssteuerleitung
- 58: Regenerierungsrückschlagventil
- 59: Regenerierungsleitung
- 60: Regenerierungsdrossel
- 62: Ablassventilsteuerleitung
- 64: Ablassventil
- 65: Drossel
- 66: Entlüftungsleitung

- 100: Eingangsanschluss
- 101: Gehäuse
- 102: Ausgangsanschluss
- 104: Entlüftungsanschluss
- 108: Spule
- 109: Spulenanschlüsse
- 110: Anker
- 112: Betätigungselement
- 113: Anschlagselement
- 114: Dichtgummi
- 116: Feder
- 117: kleine Feder

## Patentansprüche

1. Druckluftversorgungseinrichtung (10) für Nutzfahrzeuge, wobei die Druckluftversorgungseinrichtung (10) mit einer elektronischen Steuereinrichtung (12) elektrisch verbunden oder verbindbar ist, und wobei die Druckluftversorgungseinrichtung (10) aufweist:
mindestens ein Steuerventil (16, 18), das über die elektronische Steuereinrichtung (12) ansteuerbar ist, wobei das Steuerventil (16, 18) mindestens einen Eingangsanschluss (100), einen Entlüftungsanschluss (104) und einen Ausgangsanschluss (102) aufweist;
eine Steuerleitung (52), die mit dem Ausgangsanschluss (102) des Steuerventils (16, 18) verbunden ist, wobei die Steuerleitung (52) mit einem Steuereingang eines Kompressors und/oder einem Eingang eines Regenerierungsventils (18, 58) verbunden oder verbindbar ist;
eine Versorgungsleitung (30, 56), über die Druckluft zu dem Eingangsanschluss (100) des Steuerventils (16, 18) geführt oder führbar ist;
eine Entlüftungsleitung (46), die mit dem Entlüftungsanschluss (104) des Steuerventils (16, 18) verbunden ist, wobei das Steuerventil (16, 18) über die Entlüftungsleitung (46, 66) entlüftbar ist;
**dadurch gekennzeichnet dass** das Steuerventil (16, 18) ferner derart ausgebildet ist, dass es bei einem vorbestimmten Öffnungsdruck in der Versorgungsleitung (30, 56) pneumatisch eine fluidleitende Verbindung zwischen dem Eingangsanschluss (100) und dem Ausgangsanschluss (102) derart herstellt, dass die Steuerleitung (52, 59) belüftet wird.

2. Druckluftversorgungseinrichtung nach Anspruch 1, wobei ein zum Entlüften des Steuerventils (16, 18) wirksamer Entlüftungsströmungsquerschnitt kleiner ist als ein zum Belüften der Steuerleitung (52, 59) über das Steuerventil (16, 18) wirksamer Steuerströmungsquerschnitt.

3. Druckluftversorgungseinrichtung nach Anspruch 1 oder 2, wobei ein zum Führen von Druckluft in das Steuerventil (16, 18) über die Versorgungsleitung (30, 56) und den Eingangsanschluss (100) wirksamer Versorgungsströmungsquerschnitt größer ist als ein zum Entlüften des Steuerventils (16, 18) wirksamer Entlüftungsströmungsquerschnitt und/oder als ein zum Belüften der Steuerleitung (52, 59) über das Steuerventil (16, 18) wirksamer Steuerströmungsquerschnitt.

4. Druckluftversorgungseinrichtung nach einem der Ansprüche 1 bis 3, wobei in der Entlüftungsleitung (46, 66) eine Drossel (50, 65) vorgesehen ist.

5. Druckluftversorgungseinrichtung nach einem der Ansprüche 1 bis 4, wobei ein zum Entlüften des Steuerventils (16, 18) wirksamer Strömungsquerschnitt des Entlüftungsanschlusses (104) kleiner ist als ein zum Belüften der Steuerleitung (52, 59) über das Steuerventil (16) wirksamer Strömungsquerschnitt des Ausgangsanschlusses (102).

6. Druckluftversorgungseinrichtung nach einem der Ansprüche 1 bis 5, wobei ein zum Führen von Druckluft in das Steuerventil (16, 18) wirksamer Strömungsquerschnitt des Eingangsanschlusses (100) größer ist als ein zum Entlüften des Steuerventils (16, 18) wirksamer Strömungsquerschnitt des Entlüftungsanschlusses (104) und/oder als ein zum Belüften der Steuerleitung (52, 59) über das Steuerventil (16, 18) wirksamer Strömungsquerschnitt des Ausgangsanschlusses (102).

7. Druckluftversorgungseinrichtung nach einem der Ansprüche 1 bis 6, wobei in der Steuerleitung (52) ein Schnellentlüftungsventil (53) vorgesehen ist.

8. Druckluftversorgungseinrichtung nach Anspruch 7, wobei ein zum Entlüften der Steuerleitung (52) über das Schnellentlüftungsventil (53) wirksamer Strömungsquerschnitt größer ist als ein zum Entlüften des Steuerventils (16) über die Entlüftungsleitung (46) wirksamer Strömungsquerschnitt.

9. Druckluftversorgungseinrichtung nach einem der Ansprüche 1 bis 8, wobei das Steuerventil (16, 18) derart ausgebildet ist, dass es bei einem Unterschreiten eines vorbestimmten Schließdruckes in der Versorgungsleitung (30, 56) eine fluidleitende Verbindung zwischen dem Ausgangsanschluss (102) und dem Eingangsanschluss (100) unterbricht.

10. Druckluftversorgungseinrichtung nach einem der Ansprüche 1 bis 9, wobei das Steuerventil (16, 18) derart ausgebildet ist, dass es bei einem Unterschreiten eines vorbestimmten Schließdruckes in der Versorgungsleitung (30, 56) eine fluidleitende Verbindung zwischen dem Ausgangsanschluss (102) und dem Entlüftungsanschluss (104) herstellt.

11. Druckluftversorgungseinrichtung nach Anspruch 9 oder 10, wobei der Schließdruck geringer ist als der Öffnungsdruck.

## Claims

1. Compressed-air supply device (10) for commercial vehicles, wherein the compressed-air supply device (10) is or can be electrically connected to an electronic control device (12), and wherein the compressed-air supply device (10) comprises:
at least one control valve (16, 18) which can be actuated by means of the electronic control device (12), wherein the control valve (16, 18) has at least one inlet connection (100), one venting connection (104) and one outlet connection (102);
a control line (52) which is connected to the outlet connection (102) of the control valve (16, 18), wherein the control line (52) is or can be connected to a control inlet of a compressor and/or an inlet of a regeneration valve (18, 58);
a supply line (30, 56) via which compressed air is guided or can be guided to the inlet connection (100) of the control valve (16, 18);
a venting line (46) which is connected to the venting connection (104) of the control valve (16, 18), wherein the control valve (16, 18) can be vented via the venting line (46, 66);
**characterised in that** the control valve (16, 18) is further embodied in such a way that, when there is a predetermined opening pressure in the supply line (30, 56), said control valve (16, 18) pneumatically brings about a fluid-conducting connection between the inlet connection (100) and the outlet connection (102) in such a way that the control line (52, 59) is ventilated.

2. Compressed-air supply device according to claim 1, wherein a venting flow cross-section which has the function of venting the control valve (16, 18) is smaller than a control flow cross-section which has the function of ventilating the control line (52, 59) via the control valve (16, 18).

3. Compressed-air supply device according to claim 1 or 2, wherein a supply flow cross-section which has the function of guiding compressed air into the control valve (16, 18) via the supply line (30, 56) and the inlet connection (100) is larger than a venting flow cross-section which has the function of venting the control valve (16, 18) and/or than a control flow cross-section which has the function of ventilating the control line (52, 59) via the control valve (16, 18).

4. Compressed-air supply device according to any of claims 1 to 3, wherein a restrictor (50, 65) is provided in the venting line (46, 66).

5. Compressed-air supply device according to any of claims 1 to 4, wherein a flow cross-section of the venting connection (104), which has the function of venting the control valve (16, 18), is smaller than a flow cross-section of the outlet connection (102), which has the function of ventilating the control line (52, 59) via the control valve (16).

6. Compressed-air supply device according to any of claims 1 to 5, wherein a flow cross-section of the inlet connection (100), which has the function of guiding compressed air into the control valve (16, 18), is larger than a flow cross-section of the venting connection (104), which has the function of venting the control valve (16, 18), and/or than a flow cross-section of the outlet connection (102), which has the function of ventilating the control line (52, 59) via the control valve (16, 18).

7. Compressed-air supply device according to any of claims 1 to 6, wherein a quick-acting venting valve (53) is provided in the control line (52).

8. Compressed-air supply device according to claim 7, wherein a flow cross-section which has the function of venting the control line (52) via the quick-acting venting valve (53) is larger than a flow cross-section which has the function of venting the control valve (16) via the venting line (46).

9. Compressed-air supply device according to any of claims 1 to 8, wherein the control valve (16, 18) is embodied in such a way that, when a predetermined closing pressure in the supply line (30, 56) is undershot, said control valve (16, 18) interrupts a fluid-conducting connection between the outlet connection (102) and the inlet connection (100).

10. Compressed-air supply device according to any of claims 1 to 9, wherein the control valve (16, 18) is embodied in such a way that, when a predetermined closing pressure in the supply line (30, 56) is undershot, said control valve (16, 18) brings about a fluid-conducting connection between the outlet connection (102) and the venting connection (104).

11. Compressed-air supply device according to claim 9 or 10, wherein the closing pressure is lower than the opening pressure.

## Revendications

1. Dispositif (10) d'alimentation en air comprimé de véhicules utilitaires, le dispositif (10) d'alimentation en air comprimé étant relié électriquement à un dispositif (12) électronique de commande ou pouvant l'être et le dispositif (10) d'alimentation en air comprimé comporte :
au moins une vanne (16, 18) de commande, qui peut être commandée par le dispositif (12) électronique de commande, la vanne (16, 18) de commande ayant au moins un raccord (10) d'entrée, un raccord (104) de purge et un raccord (102) de sortie ;
une ligne (52) de commande, qui est reliée au raccord (102) de sortie de la vanne (16, 18) de commande, la ligne (52) de commande étant reliée à une entrée de commande d'un compresseur et/ou à une entrée d'une vanne (18, 58) de régénération ou pouvant l'être ;
une ligne (30, 56) d'alimentation, par laquelle de l'air comprimé est conduit au raccord (100) d'entrée de la vanne (16, 18) de commande ou peut l'être ;
une ligne (46) de purge, qui est reliée au raccord (104) de purge de la vanne (16, 18) de commande, la vanne (16, 18) de commande pouvant être purgée par la ligne (46, 66) de purge ;
**caractérisé en ce que** la vanne (16, 18) de commande est constituée en outre de manière à ce que pour une pression d'ouverture définie à l'avance dans la ligne (30, 56) d'alimentation, il est ménagé pneumatiquement une liaison fluidique entre le raccord (100) d'entrée et le raccord (102) de sortie de manière à ce que la ligne (52, 59) de commande soit alimentée en air.

2. Dispositif d'alimentation en air comprimé suivant la revendication 1, dans lequel une section transversale efficace d'écoulement de purge pour purger la vanne (16, 18) de commande est plus petite qu'une section transversale efficace d'écoulement de commande pour alimenter en air la ligne (52, 59) de commande par l'intermédiaire de la vanne (16, 18) de commande.

3. Dispositif d'alimentation en air comprimé suivant la revendication 1 ou 2, dans lequel une section transversale efficace d'écoulement d'alimentation pour conduire de l'air comprimé dans la vanne (16, 18) de commande par l'intermédiaire de la ligne (30, 56) d'alimentation et par l'intermédiaire du raccord (100) d'entrée est plus grande qu'une section transversale efficace d'écoulement de purge pour purger la vanne (16, 18) de commande et/ou qu'une section transversale efficace d'écoulement de commande pour alimenter en air la ligne (52, 59) de commande par l'intermédiaire de la vanne (16, 18) de commande.

4. Dispositif d'alimentation en air comprimé suivant l'une des revendications 1 à 3, dans lequel il est prévu un étranglement (50, 65) dans la ligne (46, 66) de purge.

5. Dispositif d'alimentation en air comprimé suivant l'une des revendications 1 à 4, dans lequel une section transversale d'écoulement efficace du raccord (104) de purge pour purger la vanne (16, 18) de commande est plus petite qu'une section transversale efficace d'écoulement du raccord (102) de sortie pour alimenter en air la ligne (52, 59) de commande par l'intermédiaire de la vanne (16) de commande.

6. Dispositif d'alimentation en air comprimé suivant l'une des revendications 1 à 5, dans lequel une section transversale efficace d'écoulement du raccord (100) d'entrée pour conduire de l'air comprimé dans la vanne (16, 18) de commande est plus grande qu'une section transversale efficace d'écoulement du raccord (104) de purge pour purger la vanne (16, 18) de commande et/ou qu'une section transversale efficace d'écoulement du raccord (102) de sortie pour alimenter en air la ligne (52, 59) de commande par l'intermédiaire de la vanne (16, 18) de commande.

7. Dispositif d'alimentation en air comprimé suivant l'une des revendications 1 à 6, dans lequel une vanne (53) de purge rapide est prévue dans la ligne (52) de commande.

8. Dispositif d'alimentation en air comprimé suivant la revendication 7, dans lequel une section transversale efficace d'écoulement pour purger la ligne (52) de commande par l'intermédiaire de la vanne (53) de purge rapide est plus grande qu'une section transversale efficace d'écoulement pour purger la vanne (16) de commande par l'intermédiaire de la ligne (46) de purge.

9. Dispositif d'alimentation en air comprimé suivant l'une des revendications 1 à 8, dans lequel la vanne (16, 18) de commande est constituée de manière à interrompre, si l'on passe en dessous d'une pression de fermeture définie à l'avance dans la ligne (30, 56) d'alimentation, une liaison fluidique entre le raccord (102) de sortie et le raccord (100) d'entrée.

10. Dispositif d'alimentation en air comprimé suivant l'une des revendications 1 à 9, dans lequel la vanne (16, 18) de commande est constituée de manière à ménager, si l'on passe en dessous d'une pression de fermeture définie à l'avance dans la ligne (30, 56) d'alimentation, une liaison fluidique entre le raccord (102) de sortie et le raccord (104) de purge.

11. Dispositif d'alimentation en air comprimé suivant la revendication 9 ou 10, dans lequel la pression de fermeture est plus petite que la pression d'ouverture.
